# EUROPEAN PATENT SPECIFICATION

(11) **EP 1 095 113 B1**
(45) Date of publication and mention of the grant of the patent: **23.10.2002**
(21) Application number: 99931592.2
(22) Date of filing: 05.07.1999
(51) Int. Cl.: C09D 175/16, C03C 25/10

(54) **LIQUID CURABLE RESIN COMPOSITION**
FLÜSSIGE, HÄRTBARE HARZZUSAMMENSETZUNG
COMPOSITION DE RESINE LIQUIDE DURCISSABLE

(30) Priority: 07.07.1998 JP 19178998
(43) Date of publication of application: 02.05.2001
(73) Proprietor: DSM N.V., 6411 TE Heerlen (NL); JSR Corporation, Tokyo 104-8410 (JP)
(72) Inventor: TAKASE, Hideaki, Tsukuba, Ibaraki 300 (JP); KOMIYA, Zen, Tsukuba, Ibaraki 305 (JP); UKACHI, Takashi, Ushiku 300-12 (JP)
(74) Representative: den Hartog, Jeroen Hendrikus Joseph
(86) International application number: NL9900422
(87) International publication number: WO00001781

(56) References cited:
- EP-A- 0 453 838
- WO-A-94/12554
- WO-A-98/12273
- DE-A- 2 937 266
- PATENT ABSTRACTS OF JAPAN vol. 009, no. 283 (C-313), 9 November 1985 (1985-11-09) & JP 60 127317 A (TOA GOSEI KAGAKU KOGYO KK), 8 July 1985 (1985-07-08)
- PATENT ABSTRACTS OF JAPAN vol. 1997, no. 06, 30 June 1997 (1997-06-30) & JP 09 040729 A (DAINIPPON PRINTING CO LTD;SANYO CHEM IND LTD), 10 February 1997 (1997-02-10)
- DATABASE WPI Week 8924 Derwent Publications Ltd., London, GB; AN 176037 XP002118228 "composition cover optical fibre" & JP 01 115964 A (DESOTO), 9 May 1989 (1989-05-09)

## Description

### Field of the Invention

The present invention relates to a curable composition having superior liquid storage stability and capable of producing cured products by polymerization without impairing mechanical properties. In particular, the curable composition of the present invention is a liquid curable composition that can be formulated for use in a wide variety of applications including, for example, coatings and/or binders. In particular, these curable compositions offer relatively fast cure speeds which offer advantages in many application such as in the production of fiber optics wherein production speeds make it desirable to utilize primary coatings, secondary coatings (including, for example transparent and/or colored secondary coatings), inks, matrix materials and/or bundling materials that can be cured rapidly.

### Background of the Invention

In the production of optical fibers, a resin coating is applied immediately after spinning molten glass fibers for protection and reinforcement. A known structure of the resin coating has been a double-layered coating structure consisting of a primary coating layer of a flexible resin which is coated on the surface of optical fibers and a secondary coating layer of a rigid resin which is provided over the primary coating layer. A so-called optical fiber ribbon has been known in the art in the application of optical fibers provided with such a resin coating. The optical fiber ribbon is made from several optical fibers, e.g. four or eight optical fibers, arranged on a plane and secured with a binder to produce a ribbon structure having a rectangular cross section. A resin composition for forming the primary coating layer is called a soft coating, a resin composition for forming the secondary coating layer is called a hard coating, and a material for binding several optical fibers to produce the optical fiber ribbon structure is called a ribbon matrix material. Often, the fibers for identification purposes will be further coated with an ink, which is a curable resin comprising a colorant (such as a pigment and/or a dye), or the secondary coating may be a colored secondary coating (i.e, comprise a colorant). In addition, a material for the further binding of several optical fiber ribbons to produce multi-core optical fiber ribbons is called a bundling material.

Characteristics required for curable resins used as coating materials for optical fibers include: being a liquid at room temperature and having a sufficiently low viscosity for excellent coating; exhibiting superior storage stability and no compositional distribution as a liquid; providing good productivity owing to a high cure speed; having sufficient strength and superior flexibility after curing; exhibiting very little physical change during wide range temperature changes; having superior heat resistance and superior resistance to hydrolysis; showing superior long term reliability due to little physical change over time; showing superior resistance to chemicals such as acids and alkalis; absorbing only a small amount of moisture and water; exhibiting superior light resistance; exhibiting high oil resistance; producing little hydrogen gas which adversely affects optical fibers.

The resin composition for coating optical fibers must remain a liquid after being stored for a long period of time. If the resin composition solidifies entirely or partially by flocculation such as crystallization, the composition must be heated to avoid any problems in coatablity and properties of the optical fibers, thereby impairing handling of the resin composition. Such compositions are disclosed in DE 2 937 266 A and US 4 992 524 A.

An object of the present invention is to provide a curable resin composition which exhibits excellent liquid stability without solidifying when stored for a long period of time at room temperature.

### Summary of the Invention

The present invention provides a curable composition comprising an urethane (meth)acrylate as defined in claim 1.

The curable composition of the present invention may be formulated for use in a wide variety of applications including, for example, coatings and/or binders. In particular, these curable compositions offer relatively fast cure speeds which offer advantages in many application such as in the production of fiber optics wherein production speeds make it desirable to utilize primary coatings, secondary coatings (including, for example transparent and/or colored secondary coatings), inks, matrix materials and/or bundling materials that can be cured rapidly.

A method for forming the curable composition of the present invention comprising a process for forming the urethane compound by reacting
(a) a polyol having a melting point of 0°C or higher,
(b) a polyisocyanate, and
(c) a (meth)acrylate containing a hydroxyl group, derived from a (meth)acrylic acid and an epoxy wherein the process includes (i) reacting the polyol, the polyisocyanate, and the hydroxyl group-containing (meth)acrylate altogether; (ii) reacting the polyol and the polyisocyanate, and reacting the resulting product with the hydroxyl group-containing (meth)acrylate; (iii) reacting the polyisocyanate and the hydroxyl group-containing (meth)acrylate, and reacting the resulting product with the polyol; and (iv) reacting the polyisocyanate and the hydroxyl group-containing (meth)acrylate, reacting the resulting product with the polyol, and reacting the hydroxyl group-containing (meth)acrylate once more.

### A Detailed Description of Preferred Embodiments of the Invention

(Meth)acrylic as used herein is understood to represent separately and collectively acrylic, methacrylic and mixtures thereof. Similarly, (meth)acrylate as used herein is understood to represent separately and collectively acrylate, (meth)acrylate, and mixtures thereof.

The curable resin of the present invention comprises a urethane compound having at least one (meth)acrylate group derived from a (meth)acrylic acid and an epoxy comprising at least four carbons and a molecular weight of at least 85 and/or at least one (meth)acrylate ester of an hydroxyalkylgroup, which hydroxyalkyl group has at least 4 carbon atoms and at least a molecular weight of 85. Those urethane compounds comprising at least one terminal (meth)acrylate group are preferred with those having two terminal (meth)acrylate groups being more preferred. The methacrylate group derived from (meth)acrylic acid and epoxy can be formed by any reaction technique suitable for such purpose. The epoxy includes epoxies represented by the following formula (1) : 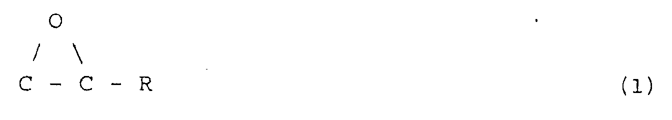 wherein
R represents an organic group having a molecular weight of 30 or higher. Preferably, R comprises at least three carbon atoms. Preferably, R represents an organic group comprising a substituted or unsubstituted, saturated or unsaturated, and/or branched or unbranched alkyl group, alkyloxy group, alkoxyalkyl group, aryl group, aryloxy group, aryloxyalkyl group, aryloxyaryl group, and/or alkoxyaryl group, with alkoxyaryl and/or alkoxyalkyl groups being most preferred.

Preferably, the epoxy includes epoxies represented by the following formula (2) : 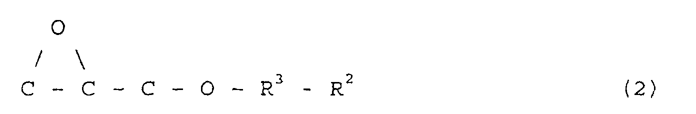 wherein R³ represents a divalent radical comprising a substituted or unsubstituted, saturated or unsaturated, and/or branched or unbranched alkyl group or aryl group, with an aryl group being preferred; and R² represents a hydrogen atom or an organic group comprising one or more carbon atoms.

Particularly preferred urethane compounds include (meth)acrylates esters of hydroxyalkyl groups such as those having a terminal group represented by the following formula (3) : 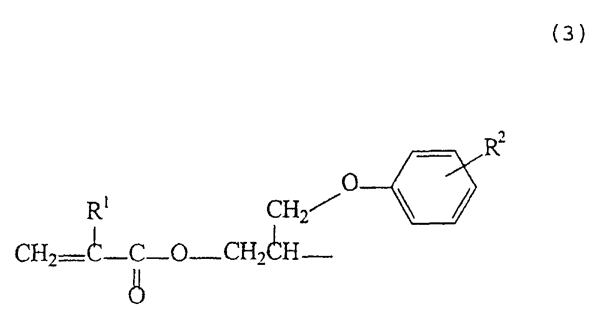 wherein R¹ is a hydrogen atom or methyl group and R² is as described above. The term "hydroxyalkyl" denotes that the hydroxy group available for the reaction with isocyanate, and the oxygen of the ester with the (meth)acrylate group are attached to a (saturated) alkylgroup; other parts of the molecule can contain e.g. an aromatic group.

The urethane (meth)acrylate can be prepared by reacting
(A) a polyol having a melting point of 0°C or higher,
(B) a polyisocyanate, and
(C) a (meth)acrylate containing a hydroxyl group wherein (meth)acrylate, as described above, is derived from a (meth)acrylic acid and an epoxy and/or is a (meth)acrylate ester of an hydroxyalkyl.

Given as examples of the process for manufacturing the urethane (meth)acrylate by reacting these compounds are (i) a process for reacting the polyol, the polyisocyanate, and the hydroxyl group-containing (meth)acrylate altogether; (ii) a process for reacting the polyol and the polyisocyanate, and reacting the resulting product with the hydroxyl group-containing (meth)acrylate; (iii) a process for reacting the polyisocyanate and the hydroxyl group-containing (meth)acrylate, and reacting the resulting product with the polyol; and (iv) a process for reacting the polyisocyanate and the hydroxyl group-containing (meth)acrylate, reacting the resulting product with the polyol, and reacting the hydroxyl group-containing (meth)acrylate once more.

Given as examples of the polyol having a melting point of 0°C or higher used as the component (A) are polyether polyols, polyester polyols, polycarbonate polyols, polycaprolactone polyols, and other polyols. These polyols may be used either individually or in combinations of two or more. There are no specific limitations to the manner of polymerization of the structural units in these polyols. Any of random polymerization, block polymerization, or graft polymerization is acceptable.

Given as examples of the polyether polyols having a melting point of 0° or higher are polyethylene glycol, polypropylene glycol, polytetramethylene glycol, polyhexamethylene glycol, polyheptamethylene glycol, polydecamethylene glycol, and polyether diols obtained by ring-opening copolymerization of two or more ion-polymerizable cyclic compounds. Here, given as examples of the ion-polymerizable cyclic compounds are cyclic ethers such as ethylene oxide, isobutene oxide, tetrahydrofuran, 2-methyltetrahydrofuran, 3-methyltetrahydrofuran, dioxane, trioxane, tetraoxane, cyclohexene oxide, styrene oxide, epichlorohydrin, isoprene monoxide, vinyl oxetane, vinyl tetrahydrofuran, vinyl cyclohexene oxide, phenyl glycidyl ether, butyl glycidyl ether, and glycidyl benzoate. Specific examples of combinations of two or more ion-polymerizable cyclic compounds include combinations for producing a binary copolymer such as tetrahydrofuran and 2-methyltetrahydrofuran, tetrahydrofuran and 3-methyltetrahydrofuran, and tetrahydrofuran and ethylene oxide; and combinations for producing a ternary copolymer such as a combination of tetrahydrofuran, 2-methyltetrahydrofuran, and ethylene oxide, a combination of tetrahydrofuran, butene-1-oxide, and ethylene oxide, and the like. The ring-opening copolymers of these ion-polymerizable cyclic compounds may be either random copolymers or block copolymers.

Included in these polyether polyols are products commercially available under the trademarks, for example, PTMG1000, PTMG2000 (manufactured by Mitsubishi Chemical Corp.), PEG#1000 (manufactured by Nippon Oil and Fats Co., Ltd.), PTG650 (SN), PTG1000 (SN), PTG2000 (SN), PTG3000, PTGL1000, PTGL2000 (manufactured by Hodogaya Chemical Co., Ltd.), and PEG400, PEG600, PEG1000, PEG1500, PEG2000, PEG4000, PEG6000 (manufactured by Daiichi Kogyo Seiyaku Co., Ltd.).

Polyester diols obtained by reacting a polyhydric alcohol and a polybasic acid are given as examples of the polyester polyols having a melting point of 0°C or higher. As examples of the polyhydric alcohol, ethylene glycol, polyethylene glycol, tetramethylene glycol, polytetramethylene glycol, 1,6-hexanediol, 3-methyl-1,5-pentanediol, 1,9-nonanediol, 2-methyl-1,8-octanediol, and the like can be given. As examples of the polybasic acid, phthalic acid, isophthalic acid, terephthalic acid, maleic acid, fumaric acid, adipic acid and sebasic acid can be given.

These polyester polyol compounds are commercially available under the trademarks such as MPD/IPA500, MPD/IPA1000, MPD/IPA2000, MPD/TPA500, MPD/TPA1000, MPD/TPA2000, Kurapol A-1010, A-2010, PNA-2000, PNOA-1010, and PNOA-2010 (manufactured by Kuraray Co., Ltd.).

As examples of the polycarbonate polyols having a melting point of 0°C or higher, polycarbonate of polytetrahydrofuran, poly(hexanediol carbonate), poly(nonanediol carbonate) and poly(3-methyl-1,5-pentamethylene carbonate) can be given.

As commercially available products of these polycarbonate polyols, DN-980, DN-981 (manufactured by Nippon Polyurethane Industry Co., Ltd.), PNOC-2000, PNOC-1000 (manufactured by Kuraray Co., Ltd.), PLACCEL CD220, CD210, CD208, CD205 (manufactured by Daicel Chemical Industries, Ltd.) and PC-THF-CD (manufactured by BASF) can be given.

Polycaprolactone diols obtained by reacting ε-caprolactone and a diol compound are given as examples of the polycaprolactone polyols having a melting point of 0°C or higher. Here, given as examples of the diol compound are ethylene glycol, polyethylene glycol, propylene glycol, polypropylene glycol, tetramethylene glycol, polytetramethylene glycol, 1,2-polybutylene glycol, 1,6-hexanediol, neopentyl glycol, 1,4-cyclohexanedimethanol and 1,4-butanediol.

Commercially available products of these polycaprolactone polyols include PLACCEL 240, 230, 230ST, 220, 220ST, 220NP1, 212, 210, 220N, 210N, L230AL, L220AL, L220PL, L220PM, L212AL (all manufactured by Daicel Chemical Industries, Ltd.).

As examples of other polyols used as the component (A), ethylene glycol, 1,4-butanediol, 1,5-pentanediol, 1,6-hexanediol, polyoxyethylene bisphenol A ether, polyoxypropylene bisphenol A ether, polyoxyethylene bisphenol F ether and polyoxypropylene bisphenol F ether can be given.

As the polyols with a melting point of 0°C or higher, those having a alkylene oxide structure in the molecule, in particular polyether polyols, are preferable. Specifically, polyols containing polytetramethylene glycol are particularly preferred.

The polystyrene-reduced number average molecular weight of these polyols is usually from 50 to 15,000, and preferably from 1,000 to 8,000.

Given as examples of the polyisocyanate used as the component (B) are 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexylisocyanate), 2,2,4-trimethylhexamethylene diisocyanate, bis(2-isocyanatethyl)fumarate, 6-isopropyl-1,3-phenyl diisocyanate, 4-diphenylpropane diisocyanate, hydrogenated diphenylmethane diisocyanate, hydrogenated xylylene diisocyanate, tetramethyl xylylene diisocyanate and lysine isocyanate. These polyisocyanate compounds may be used either individually or in combinations of two or more.

Examples of the hydroxyl group-containing (meth)acrylate used as the component (C), include, in addition to (meth)acrylates derived from (meth)acrylic acid and epoxy and (meth)acrylates comprising alkylene oxides as discussed above, (meth)acrylates represented by the hydroxy-terminated compounds comprising (meth)acrylates represented by formula (3), above.

The ratio of the polyol (A), polyisocyanate (B), and hydroxyl group-containing (meth)acrylate (C) used for preparing the urethane (meth)acrylate is determined so that 1.1 to 3 equivalents of an isocyanate group included in the polyisocyanate and 0.1 to 1.5 equivalents of a hydroxyl group included in the hydroxyl group-containing (meth)acrylate are used for one equivalent of the hydroxyl group included in the polyol.

In the reaction of these three components, a urethanization catalyst such as copper naphthenate, cobalt naphthenate, zinc naphthenate, di-n-butyl tin dilaurate, triethylamine, and triethylenediamine-2-methyltriethyleneamine, is usually used in an amount from 0.01 to 1 wt% of the total amount of the reactant. The reaction is carried out at a temperature from 10 to 90°C, and preferably from 30 to 80°C.

The urethane (meth)acrylate thus prepared possesses the molecule terminal shown by the above formula (3). As examples of the organic group shown by R² in the formula (3), alkyl groups such as a methyl group and an ethyl group, alkoxy groups such as a methoxy group and an ethoxy group, and the like can be given. In particular, a hydrogen atom is preferable as R².

The number average molecular weight of the urethane (meth)acrylate used in the composition of the present invention is preferably in the range from 100 to 20,000, and more preferably from 500 to 15,000. If the number average molecular weight of the urethane (meth)acrylate is less than 100, the resin composition tends to solidify; on the other hand, if the number average molecular weight is larger than 20,000, the viscosity of the composition becomes high, making handling of the composition difficult.

The urethane (meth)acrylate is used in an amount from 10 to 90 wt%, and preferably from 20 to 80 wt%, of the total amount of the resin composition. When the composition is used as a coating material for optical fibers, the range from 20 to 80 wt% is particularly preferable to ensure excellent coatability, as well as superior flexibility and long-term reliability of the cured coating.

Polymerizable vinyl monomers such as polymerizable monofunctional vinyl monomers containing one polymerizable vinyl group in the molecule and polymerizable polyfunctional vinyl monomers containing two or more polymerizable vinyl groups in the molecule may be added to the liquid curable resin composition of the present invention.

Given as specific examples of the polymerizable monofunctional vinyl monomers are vinyl monomers such as N-vinylpyrrolidone, N-vinylcaprolactam, vinylimidazole, and vinylpyridine; (meth)acrylates containing an alicyclic structure such as isobornyl (meth)acrylate, bornyl (meth)acrylate, tricyclodecanyl (meth)acrylate, dicyclopentanyl (meth)acrylate, dicyclopentenyl (meth)acrylate, and cyclohexyl (meth)acrylate; benzyl (meth)acrylate, 4-butylcyclohexyl (meth)acrylate, acryloylmorpholine, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (math)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, benzyl(meth)acrylate, phenoxyethyl(meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone(meth)acrylamide, isobutoxymethyl(meth)acrylamide, N,N-dimethyl(meth)acrylamide, t-octyl(meth)acrylamide, dimethylaminoethyl (meth)acrylate, diethylaminoethyl (meth)acrylate, 7-amino-3,7-dimethyloctyl (meth)acrylate, N,N-diethyl(meth)acrylamide, N,N-dimethylaminopropyl(meth)acrylamide, hydroxy butyl vinyl ether, lauryl vinyl ether, cetyl vinyl ether, 2-ethylhexyl vinyl ether, acrylate monomers shown by the following formulas (4) to (6), 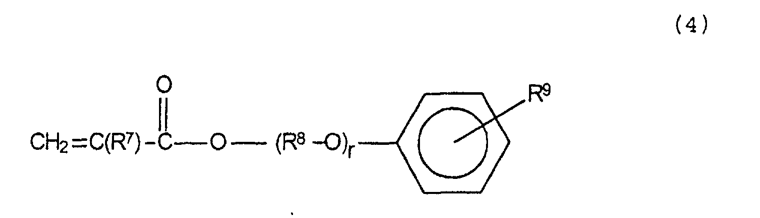 wherein R⁷ is a hydrogen atom or a methyl group, R⁸ is an alkylene group having 2-6, and preferably 2-4 carbon atoms, R⁹ is a hydrogen atom or an organic group containing 1-12 carbon atoms or an aromatic ring, and r is an integer from 0 to 12, and preferably from 1 to 8, 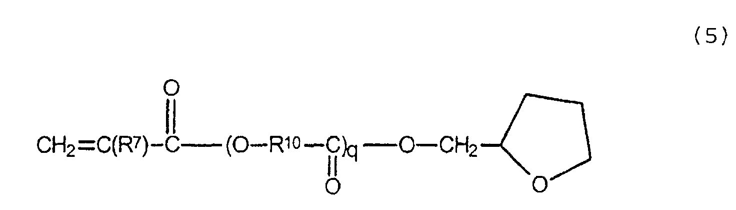 wherein R⁷ is the same as defined above, R¹⁰ is an alkylene group having 2-8, and preferably 2-5 carbon atoms, and q is an integer from 1 to 8, and preferably from 1 to 4, 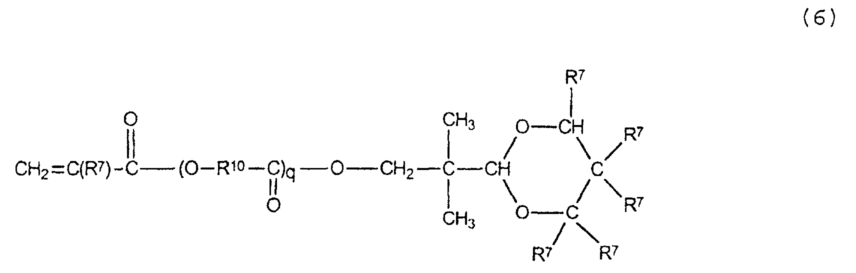 wherein R⁷, R¹⁰, and q are the same as defined above.

As examples of commercially available products of the polymerizable monofunctional vinyl monomers, Aronix M102, M110, M111, M113, M117 (manufactured by Toagosei Co., Ltd.), LA, IBXA, Viscoat #190, #192, #2000 (manufactured by Osaka Organic Chemical Industry Co., Ltd.), Light Acrylate EC-A, PO-A, NP-4EA, NP-8EA, M-600A, HOA-MPL (manufactured by Kyoeisha Chemical Co., Ltd.) and KAYARAD TC110S, R629, R644 (manufactured by Nippon Kayaku Co., Ltd.) can be given.

Given as examples of the polymerizable polyfunctional vinyl monomers are the following acrylate compounds: trimethylolpropane tri(meth)acrylate, pentaerythritol tri(meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, trimethylolpropanetrioxyethyl (meth)acrylate, tris(2-hydroxyethyl)isocyanurate tri(meth)acrylate, tris(2-hydroxyethyl)isocyanurate di(meth)acrylate, bis(hydroxymethyl)tricyclodecane di(meth)acrylate, di(meth)acrylate of a diol which is an addion compound of ethylene oxide or propylene oxide to bisphenol A, di(meth)acrylate of a diol which is an addition compound of ethylene oxide or propylene oxide to hydrogenated bisphenol A, epoxy(meth)acrylate obtained by the addition of (meth)acrylate to diglycidyl ether of bisphenol A, diacrylate of polyoxyalkylene bisphenol A, and triethylene glycol divinyl ether.

Examples of commercially available products of the polymerizable polyfunctional vinyl monomers include Yupimer UV SA1002, SA2007 (manufactured by Mitsubishi Chemical Corp.), Viscoat #195, #230, #215, #260, #335HP, #295, #300, #700 (manufactured by Osaka Organic Chemical Industry Co., Ltd.), Light Acrylate 4EG-A, 9EG-A, NP-A, DCP-A, BP-4EA, BP-4PA, PE-3A, PE-4A, DPE-6A (manufactured by Kyoeisha Chemical Co., Ltd.), KAYARAD R-604, DPCA-20,-30,-60,-120, HX-620, D-310, D-330 (manufactured by Nippon Kayaku Co., Ltd.), Aronix M-208, M-210, M-215, M-220, M-240, M-305, M-309, M-315, M-325 (manufactured by Toagosei Co., Ltd.).

These polymerizable vinyl monomers are used in an amount from 10 to 70 wt%, and preferably from 15 to 60 wt%, of the total amount of the resin composition. If the amount is less than 10 wt%, the viscosity of the composition is so high that coatability is impaired. The amount exceeding 70 wt% may result in not only an increased cure shrinkage, but also insufficient toughness of the cured products.

The liquid curable resin composition of the present invention can be cured by heat or radiation. Here, radiation includes infrared radiation, visible rays, ultraviolet radiation, X-rays, electron beams, α-rays, β-rays and γ-rays.

A polymerization initiator can be added when the liquid curable resin composition of the present invention is cured. Either a heat polymerization initiator or photo-polymerization initiator can be used as the polymerization initiator.

When the liquid curable resin composition of the present invention is cured by heat, a heat polymerization initiator, usually a peroxide or an azo compound, is used. Specific examples include benzoyl peroxide, t-butyl-oxybenzoate and azobisisobutylonitrile.

When the liquid curable resin composition of the present invention is cured by radiation, a photo-polymerization initiator is used. In addition, a photosensitizer is added as required. Given as examples of the photo-polymerization initiator are 1-hydroxycyclohexylphenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2-methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyldiphenylphosphine oxide and bis-(2,6-dimethoxybenzoyl)-2,4,4-trimethylpentylphosphine oxide.

Examples of commercially available products of the photo-polymerization initiator include IRGACURE184, 369, 651, 500, 907, CGI1700, CGI1750, CGI11850, CG24-61, Darocur 1116, 1173 (manufactured by Ciba Specialty Chemicals Co., Ltd.), Lucirin LR8728 (manufactured by BASF) and Ubecryl P36 (manufactured by UCB).

Given as examples of the photosensitizer are triethylamine, diethylamine, N-methyldiethanoleamine, ethanolamine, 4-dimethylaminobenzoic acid, methyl 4-dimethylaminobenzoate, ethyl 4-dimethylaminobenzoate and isoamyl 4-dimethylaminobenzoate. As commercially available products of the photosensitizer, for example, Ubecryl P102, 103, 104, and 105 (manufactured by UCB) are given.

When both heat and radiation are used to cure the liquid curable resin composition of the present invention, the foregoing heat polymerization initiator and photo-polymerization initiator can be used in combination. The amount of the polymerization initiator used here is in the range from 0.1 to 10 wt%, and preferably from 0.5 to 7 wt%, of the total amount of the components for the resin composition.

Beside the above-described components, other curable oligomers or polymers may be added to the liquid curable resin composition of the present invention to the extent that the characteristics of the liquid curable resin composition are not adversely affected.

Such other curable oligomers or polymers include polyester (meth)acrylate, epoxy (meth)acrylate, polyamide (meth)acrylate, siloxane polymer having a (meth)acryloyloxy group, a reactive polymer obtained by reacting (meth)acrylic acid and a copolymer of glycidyl methacrylate and other polymerizable monomers.

An amine compound can be added to the liquid curable resin composition of the present invention to prevent generation of hydrogen gas, which causes transmission loss in the optical fibers. As examples of the amine which can be used here, diallylamine, diisopropylamine, diethylamine and diethylhexylamine can be given.

In addition to the above-described components, various additives such as antioxidants, UV absorbers, light stabilizers, silane coupling agents, coating surface improvers, heat polymerization inhibitors, leveling agents, surfactants, colorants, preservatives, plasticizers, lubricants, solvents, fillers, aging preventives, and wettability improvers can be used in the liquid curable resin composition of the present invention, as required. Examples of antioxidants include Irganox1010, 1035, 1076, 1222 (manufactured by Ciba Specialty Chemicals Co., Ltd.), Antigene P, 3C, FR, Sumilizer GA-80 (manufactured by Sumitomo Chemical Industries Co., Ltd.), and the like; examples of UV absorbers include Tinuvin P, 234, 320, 326, 327, 328, 329, 213 (manufactured by Ciba Specialty Chemicals Co., Ltd.), Seesorb 102, 103, 110, 501, 202, 712, 704 (manufactured by Sypro Chemical Co., Ltd.), and the like; examples of light stabilizers include Tinuvin 292, 144, 622LD (manufactured by Ciba Specialty Chemicals Co., Ltd.), Sanol LS770 (manufactured by Sankyo Co., Ltd.), Sumisorb TM-061 (manufactured by Sumitomo Chemical Industries Co., Ltd.), and the like; examples of silane coupling agents include γ-aminopropyltriethoxysilane, γ-mercaptopropyltrimethoxy-silane, and γ-methacryloxypropyltrimethoxysilane, and commercially available products such as SH6062, SH6030 (manufactured by Toray-Dow Corning Silicone Co., Ltd.), and KBE903, KBE603, KBE403 (manufactured by Shin-Etsu Chemical Co., Ltd.); examples of coating surface improvers include silicone additives such as dimethylsiloxane polyether and commercially available products such as DC-57, DC-190 (manufactured by Dow- Corning), SH-28PA, SH-29PA, SH-30PA, SH-190 (manufactured by Toray-Dow Corning Silicone Co., Ltd.), KF351, KF352, KF353, KF354 (manufactured by Shin-Etsu Chemical Co., Ltd.), and L-700, L-7002, L-7500, FK-024-90 (manufactured by Nippon Unicar Co., Ltd.).

The viscosity of the liquid curable resin composition of the present invention is usually in the range from 200 to 20,000 cP, and preferably from 2,000 to 15,000 cP, at 25°C.

The radiation-curable compositions of the present invention may be formulated such that the composition after cure has a tensile modulus as low as 0.1 MPa and as high as 2,000 MPa or more. Those having a modulus in the lower range, for instance, from 0.1 to 10 MPa, preferably 0.1 to 5 MPa, and more preferably 0.5 to less than 3 MPa are typically suitable for inner primary coatings for fiber optics. In contrast, suitable compositions for outer primary coatings, inks and matrix materials generally have a modulus of above 50 MPa, with outer primary coatings tending to have a modulus more particularly above 100 up to 1,000 MPa and matrix materials tending to be more particularly between about 50 MPa to about 500 MPa.

Elongation and tensile strength of these materials can also be optimized depending on the design criteria for a particular us. For cured coatings formed from radiation-curable compositions formulated for use as inner primary coatings on optical fibers, the elongation-at-break is typically greater than 80%, more preferably the elongation-at-break is at least 110%, more preferably at least 150% but not typically higher than 400%. For coatings formulated for outer primary coatings, inks and matrix materials the elongation-at-break is typically between 10% and 100%, and preferably higher than 20%.

The glass transition temperature (Tg), measured as the peak tan-delta determined by dynamic mechanical analysis (DMA), can be optimized depending on the particulars of the application. The glass transition temperature may be from 10°C down to -70°C or lower, more preferably lower than -10°C for compositions formulated for use as inner primary coatings and 10°C to 120°C or higher, more preferably above 30°C, for compositions designed for use as outer primary coatings, inks and matrix materials.

The composition of the present invention will preferably have a cure speed of 1.0 J/cm² or less (at 95% of maximum attainable modulus). For an inner, outer primary coating, ink or matrix material, cure speed is preferably about 0.5 J/cm² or less (at 95% of maximum attainable modulus), and more preferably, about 0.3 J/cm² or less, and even more preferably, about 0.2 J/cm² or less.

The cured products obtained by the polymerization of the resin composition of the present invention are particularly suitable for use as a coating material for optical fibers, optical fiber ribbons, and the like including primary coatings, secondary coatings, colored secodary coatings, inks, matrix materials and bundling materials.

### Examples

The present invention will be explained in more detail by way of examples, which are not intended to be limiting of the present invention.

### Synthetic Example 1

### Synthesis of urethane (meth)acrylate (UA-1)

A reaction vessel equipped with a stirrer was charged with 12.5 wt% of tolylene diisocyanate, 0.08 wt% of di-n-butyltin dilaurate, and 0.02 wt% of 2,6-di-t-butyl-p-cresol. The mixture was cooled to 5 to 10°C. 15.9 wt% of a hydroxy group-containing acrylate (a compound having hydrogen atoms for both R¹ and R² in the formula (3)) was added dropwise while stirring so as to maintain the temperature at 30°C or lower. After the addition, the mixture was reacted for one hour at 30°C. 71.5 wt% of polytetramethylene glycol having a number average molecular weight of 2,000 was then added, and the mixture was reacted for two more hours at 50 to 70°C. The reaction was terminated when the content of the residual isocyanate was 0.1 wt% or less. The urethane acrylate thus obtained is designated as UA-1.

### Synthetic Example 2

### Synthesis of urethane (meth)acrylate (UA-2)

A reaction vessel equipped with a stirrer was charged with 9.2 wt% of tolylene diisocyanate, 0.08 wt% of di-n-butyltin dilaurate, and 0.02 wt% of 2,6-di-t-butyl-p-cresol. The mixture was cooled to 5 to 10°C. 11.7 wt% of a hydroxy group-containing acrylate (a compound having hydrogen atoms for both R¹ and R² in the formula (3)) was added dropwise while stirring so as to maintain the temperature at 30°C or lower. After the addition, the mixture was reacted for one hour at 30°C. 79.0 wt% of polytetramethylene glycol having a number average molecular weight of 3,000 was then added, and the mixture was reacted for two more hours at 50 to 70°C. The reaction was terminated when the content of the residual isocyanate was 0.1 wt% or less. The urethane acrylate thus obtained is designated as UA-2.

### Comparative Synthetic Example 1

### Synthesis of comparative urethane (meth)acrylate (UA-3)

A reaction vessel equipped with a stirrer was charged with 13.5 wt% of tolylene diisocyanate, 0.08 wt% of di-n-butyltin dilaurate, and 0.02 wt% of 2,6-di-t-butyl-p-cresol. The mixture was cooled to 5 to 10°C. 9.0 wt% of 2-hydroxyethyl acrylate was added dropwise while stirring so as to maintain the temperature at 30°C or lower. After the addition, the mixture was reacted for one hour at 30°C. 77.4 wt% of polytetramethylene glycol having a number average molecular weight of 2,000 was then added, and the mixture was reacted for two more hours at 50 to 70°C. The reaction was terminated when the content of the residual isocyanate was 0.1 wt% or less. The urethane acrylate thus obtained is designated as UA-3.

### Comparative Synthetic Example 2

### Synthesis of comparative urethane (meth)acrylabe (UA-4)

A reaction vessel equipped with a stirrer was charged with 13.3 wt% of tolylene diisocyanate, 0.08 wt% of di-n-butyltin dilaurate, and 0.02 wt% of 2,6-di-t-butyl-p-cresol. The mixture was cooled to 5 to 10°C. 10.0 wt% of 2-hydroxypropyl acrylate was added dropwise while stirring so as to control the temperature at 30°C or lower. After the addition, the mixture was reacted for one hour at 30°C. 76.6 wt% of polytetramethylene glycol having a number average molecular weight of 2,000 was then added, and the mixture was reacted for two more hours at 50 to 70°C. The reaction was terminated when the content of the residual isocyanate was 0.1 wt% or less. The urethane acrylate thus obtained is designated as UA-4.

### Comparative Synthetic Example 3

### Synthesis of comparative urethane (meth)acrylate (UA-5)

A reaction vessel equipped with a stirrer was charged with 9.7 wt% of tolylene diisocyanate, 0.08 wt% of di-n-butyltin dilaurate, and 0.02 wt% of 2,6-di-t-butyl-p-cresol. The mixture was cooled to 5 to 10°C. 6.5 wt% of 2-hydroxyethyl acrylate was added dropwise while stirring so as to maintain the temperature at 30°C or lower. After the addition, the mixture was reacted for one hour at 30°C. 83.7 wt% of polytetramethylene glycol having a number average molecular weight of 3,000 was then added, and the mixture was reacted for two more hours at 50 to 70°C. The reaction was terminated when the content of the residual isocyanate was 0.1 wt% or less. The urethane acrylate thus obtained is designated as UA-5.

### Comparative Synthetic Example 4

### Synthesis of comparative urethane (meth)acrylate (UA-6)

A reaction vessel equipped with a stirrer was charged with 44.5 wt% of isophorone diisocyanate, 0.08 wt% of di-n-butyltin dilaurate, and 0.02 wt% of 2,6-di-t-butyl-p-cresol. The mixture was cooled to 5 to 10°C. 34.1 wt% of 2-hydroxyethyl acrylate was added dropwise while stirring so as to maintain the temperature at 30°C or lower. After the addition, the mixture was reacted for one hour at 30°C. 21.3 wt% of polyoxyethylene bisphenol A ether having a number average molecular weight of 400 (Uniol DA400, manufactured by Nippon Oil and Fats Co., Ltd.) was then added, and the mixture was reacted for four more hours at 50 to 70°C. The reaction was terminated when the content of the residual isocyanate was 0.1 wt% or less. The urethane acrylate thus obtained is designated as UA-6.

### Examples 1-3, Comparative Examples 1-4

The components listed in Table 1 were charged into a reaction vessel equipped with a stirrer. The mixtures were stirred for 3 hours while maintaining a temperature of 50 to 70°C to obtain liquid curable resin compositions with the formulations shown in Table 1.

### Test Examples

The liquid curable resin compositions prepared in the above examples were cured to prepare test specimens. The test specimens were evaluated according to the following methods, the results are shown in Table 1.

### 1. Evaluation of liquid stability

10 g of the liquid curable resin composition was added into a 20 ml vial and allowed to stand at 10°C for a prescribed period of time to evaluate the liquid stability. A small amount of the resin liquid was placed on a slide glass to observe the presence or absence of crystals in the liquid using a polarization microscope. The period of time elapsed before the crystals were observed is shown in Table 1.

### 2. Evaluation of mechanical characteristics of cured products (measurement of modulus of elasticity)

The liquid curable resin composition was applied on a glass plate using an applicator bar to produce a coating with a thickness of 200 µm. The coating was irradiated with ultraviolet radiation at a dose of 500 mJ/cm² in air. The cured film was peeled off from the glass plate and aged under the conditions of a 23°C room temperature and a 50% relative humidity for 12 hours, thereby obtaining test specimens.

The Young's modulus of the test specimens at 23°C was measured according to JIS K7113 at a peeling rate of 1 mm/min. The Young's modulus was calculated from the tensile stress at 2.5% distortion.

Preferred compositions of the present invention include those wherein the liquid stability is greater than 10 hours, preferably greater than 15 hours and more preferably greater than 100 hours.

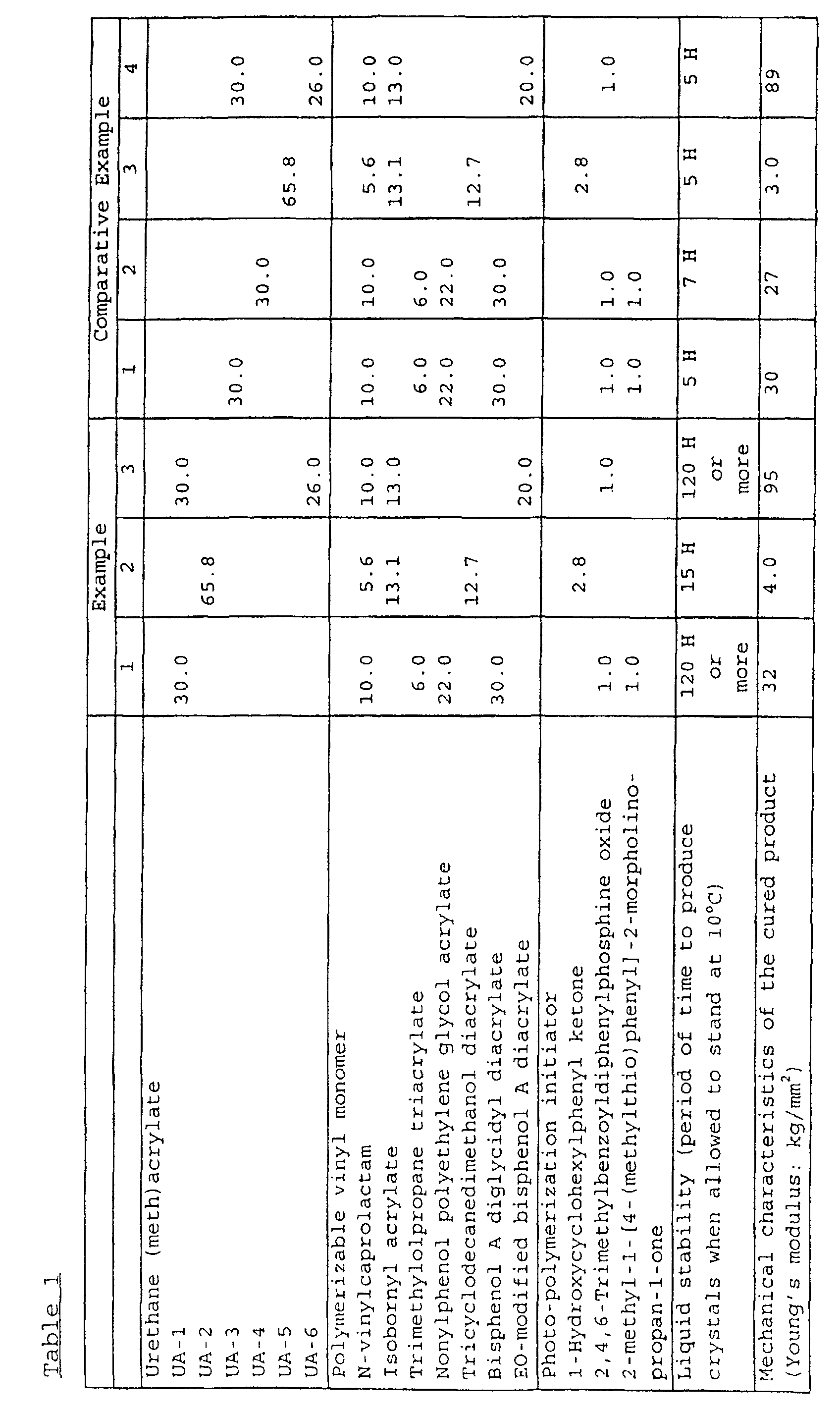

The liquid curable resin composition of the present invention has excellent liquid stability and can produce cured products having superior mechanical characteristics by polymerization. The liquid curable resin composition can be used as a coating material for optical fibers, adhesives, and the like. The composition is particularly suitable as a coating material for optical fibers for which long-term stability is required.

Preferred embodiments of the composition of the present invention as in claim 1 are as follows:
1) The liquid curable resin composition according to claim 1, wherein the component (A) comprises polytetraethylene glycol.
2) The liquid curable resin composition according to claim 1, comprising the urethane (meth)acrylate in an amount from 20 to 80 wt%.
3) The liquid curable resin composition according to claim 1, comprising the polymerizable vinyl monomers in an amount from 15 to 60 wt%.

## Claims

1. A curable composition, comprising:
a urethane (meth)acrylate prepared by reacting
(a) a polyol having a melting point of 0°C or higher,
(b) a polyisocyanate, and
(c) a (math)acrylate ester of a hydroxyalkyl group, wherein said hydroxyalkyl group comprises at least 4 carbon atoms and has a molecular weight of at least 85.

2. The composition of claim 1 wherein the (meth)acrylate ester of a hydroxyalkyl group is derived from a (meth)acrylic acid and an epoxy comprising at least four carbon atoms, the epoxy being represented by the following formula (1): 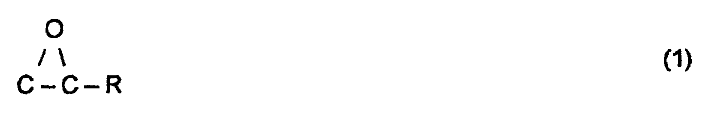 wherein
R represents an organic group having a molecular weight of at least 30.

3. The composition according to claim 2 wherein R represents an organic group comprising a substituted or unsubstituted, saturated or unsaturated, and/or branched or unbranched alkyl group, alkyloxy group, alkoxyalkyl group, aryl group, aryloxy group, aryloxyalkyl group, aryloxyaryl group, and/or alkoxyaryl group.

4. The composition according to any one of claims 2-3 wherein R represents an organic group comprising a substituted or unsubstituted, saturated or unsaturated, and/or branched or unbranched alkoxyaryl group and/or alkoxyalkyl group.

5. The composition according to any one of claims 2-4 wherein the at least one epoxy includes epoxies represented by the following formula (2): 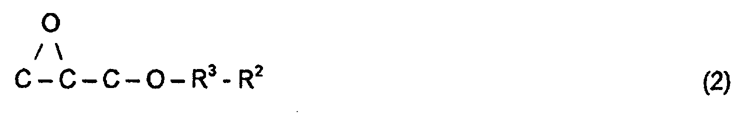 wherein
R³ represents a divalent radical comprising a substituted or unsubstituted, saturated or unsaturated, and/or branched or unbranched alkyl group and/or aryl group; and
R² represents a hydrogen atom or an organic group comprising one or more carbon atoms.

6. The composition according to claim 5 wherein R³ represents a divalent radical comprising an aryl group.

7. The composition according to any one of claims 1-6 wherein the (math)acrylate group is represented by the following formula (3): 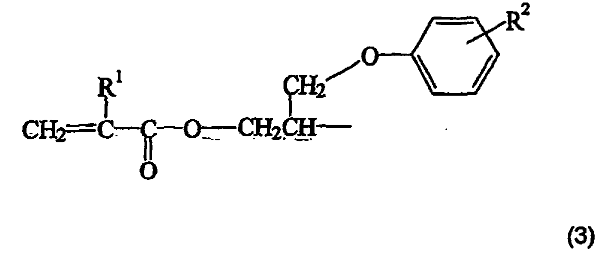 wherein
R¹ represents a hydrogen atom or methyl group, and
R² represents a hydrogen atom or an organic group comprising one or more carbon atoms.

8. The composition according to any one of claims 1-7, being adapted to provide a curable fiber optic primary coating composition, secondary coating composition, colored secondary coating composition, matrix material composition, or ink composition.

9. The composition according to any one of claims 1-8, wherein the polyol is polytetramethylene glycol.

10. The composition according to any one of claims 1-9, wherein said composition further comprises a polymerization initiator.

11. The composition according to claim 10, wherein said polymerisation initiator is a photo-polymerization initiator.

12. The composition according to claim 10, wherein said polymerisation initiator is a heat polymerization initiator.

13. An optical fiber comprising one or more coating layers, at least one of said coating layers being a cured composition according to any one of claims 1-12.

14. A process for making the composition according to any one of claim 1-12, comprising reacting:
(a) said polyol having a melting point of 0°C or higher,
(b) said polyisocyanate, and
(c) said (meth)acrylate ester.

## Patentansprüche

1. Härtbare Zusammensetzung, umfassend ein Urethan(meth)acrylat, hergestellt durch Umsetzen
(a) eines Polyols mit einem Schmelzpunkt von 0°C oder höher,
(b) eines Polyisocyanats, und
(c) eines (Meth)acrylatesters einer Hydroxyalkylgruppe, wobei die Hydroxyalkylgruppe mindestens vier Kohlenstoffatome umfaßt und ein Molekulargewicht von mindestens 85 aufweist.

2. Zusammensetzung nach Anspruch 1, wobei der (Meth)acrylatester einer Hydroxyalkylgruppe abgeleitet ist von einer (Meth)acrylsäure und einem Epoxid, welches mindestens vier Kohlenstoffatome umfaßt, wobei das Epoxid durch die folgende Formel (1) dargestellt ist: 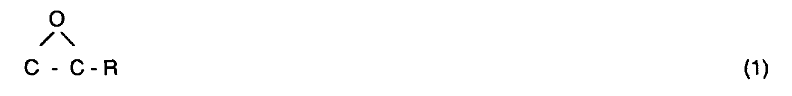 worin R eine organische Gruppe mit einem Molekulargewicht von mindestens 30 darstellt.

3. Zusammensetzung nach Anspruch 2, wobei R eine organische Gruppe darstellt, welche eine substituierte oder unsubstituierte, gesättigte oder ungesättigte, und/oder verzweigte oder unverzweigte Alkylgruppe, Alkyloxygruppe, Alkoxyalkylgruppe, Arylgruppe, Aryloxygruppe, Aryloxyalkylgruppe, Aryloxyarylgruppe, und/oder Alkoxyarylgruppe umfaßt.

4. Zusammensetzung nach einem der Ansprüche 2-3, wobei R eine organische Gruppe darstellt, welche eine substituierte oder unsubstituierte, gesättigte oder ungesättigte, und/oder verzweigte oder unverzweigte Alkoxyarylgruppe und/oder Alkoxyalkylgruppe umfaßt.

5. Zusammensetzung nach einem der Ansprüche 2-4, wobei das mindestens eine Epoxid durch die folgende Formel (2) dargestellte Epoxide einschließt: 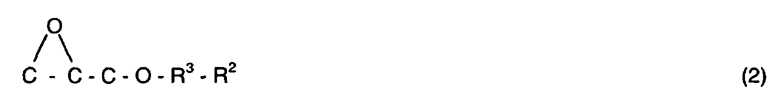 worin R³ einen zweiwertigen Rest darstellt, welcher eine substituierte oder unsubstituierte, gesättigte oder ungesättigte, und/oder verzweigte oder unverzweigte Alkylgruppe und/oder Arylgruppe umfaßt; und R² ein Wasserstoffatom oder eine organische Gruppe, welche ein oder mehrere Kohlenstoffatom(e) umfaßt, darstellt.

6. Zusammensetzung nach Anspruch 5, wobei R³ einen zweiwertigen Rest darstellt, welcher eine Arylgruppe umfaßt.

7. Zusammensetzung nach einem der Ansprüche 1-6, wobei die (Meth)acrylatgruppe durch die folgende Formel (3) dargestellt ist: 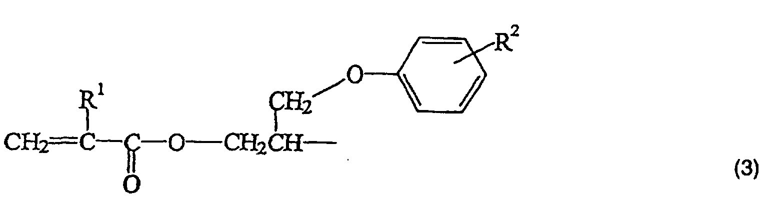 worin
R¹ ein Wasserstoffatom oder eine Methylgruppe darstellt, und
R² ein Wasserstoffatom oder eine organische Gruppe, welche ein oder mehrere Kohlenstoffatom(e) umfaßt, darstellt.

8. Zusammensetzung nach einem der Ansprüche 1-7, die angepaßt ist, für eine optische Faser eine härtbare Primärbeschichtungszusammensetzung, Sekundärbeschichtungszusammensetzung, gefärbte Sekundärbeschichtungszusammensetzung, Matrixmaterialzusammensetzung oder Tintenzusammensetzung bereitzustellen.

9. Zusammensetzung nach einem der Ansprüche 1-8, wobei das Polyol Polytetramethylenglycol ist.

10. Zusammensetzung nach einem der Ansprüche 1-9, wobei die Zusammensetzung weiterhin einen Polymerisationsinitiator umfaßt.

11. Zusammensetzung nach Anspruch 10, wobei der Polymerisationsinitiator ein Photopolymerisationsinitiator ist.

12. Zusammensetzung nach Anspruch 10, wobei der Polymerisationsinitiator ein Wärmepolymerisationsinitiator ist.

13. Optische Faser, umfassend eine oder mehrere Beschichtungsschichten, wobei mindestens eine der Beschichtungsschichten eine gehärtete Zusammensetzung gemäß einem der Ansprüche 1-12 ist.

14. Verfahren zur Herstellung der Beschichtungszusammensetzung nach einem der Ansprüche 1-12, umfassend die Umsetzung von:
(a) dem Polyol mit einem Schmelzpunkt von 0°C oder höher,
(b) dem Polyisocyanat, und
(c) dem (Meth)acrylatester.

## Revendications

1. Composition durcissable comprenant :
un (méth)acrylate d'uréthane préparé en faisant réagir :
(a) un polyol ayant un point de fusion de 0°C ou supérieur ;
(b) un polyisocyanate ; et
(c) un ester (méth)acrylate d'un groupe hydroxyalkyle, dans lequel ledit groupe hydroxyalkyle comprend au moins 4 atomes de carbone et possède une masse moléculaire d'au moins 85.

2. Composition selon la revendication 1, dans laquelle l'ester (méth)acrylate d'un groupe hydroxy-alkyle est dérivé d'un acide (méth)acrylique et d'une époxy comprenant au moins quatre atomes de carbone, l'épox étant représenté par la formule suivante (1) : 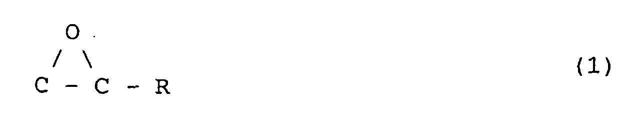 dans laquelle
R représente un groupe organique ayant une masse moléculaire d'au moins 30.

3. Composition selon la revendication 2, dans laquelle R représente un groupe organique comprenant un groupe alkyle, un groupe alkyloxy, un groupe alcoxyalkyle, un groupe aryle, un groupe aryloxy, un groupe aryloxyalkyle, un groupe aryloxyaryle et/ou un groupe alcoxyaryle substitué ou non substitué, saturé ou insaturé et/ou ramifié ou non ramifié.

4. Composition selon l'une quelconque des revendications 2 et 3, dans laquelle R représente un groupe organique comprenant un groupe alcoxyaryle et/ou alcoxyalkyle substitué ou non substitué, saturé ou insaturé et/ou ramifié ou non ramifié.

5. Composition selon l'une quelconque des revendications 2 à 4, dans laquelle au moins un époxy inclut des époxy représentés par la formule suivante (2) : 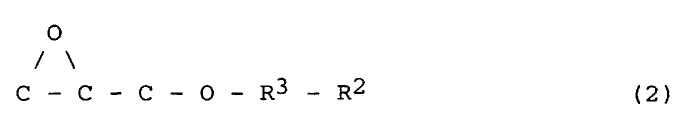 dans laquelle
R³ représente un radical divalent comprenant un groupe alkyle et/ou un groupe aryle substitué ou non substitué, saturé ou insaturé et/ou ramifié ou non ramifié ; et
R² représente un atome d'hydrogène ou un groupe organique comprenant un ou plusieurs atomes de carbone.

6. Composition selon la revendication 5, dans laquelle R³ représente un radical divalent comprenant un groupe aryle.

7. Composition selon l'une quelconque des revendications 1 à 6, dans laquelle le groupe (méth)acrylate est représenté par la formule (3) suivante : 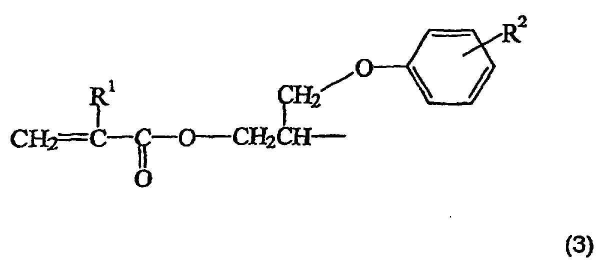 dans laquelle
R¹ représente un atome d'hydrogène ou un groupe méthyle ; et
R² représente un atome d'hydrogène ou un groupe organique comprenant un ou plusieurs atomes de carbone.

8. Composition selon l'une quelconque des revendications 1 à 7, étant adaptée pour fournir une composition de revêtement principale de fibre optique durcissable, une composition de revêtement secondaire, une composition de revêtement secondaire colorée, une composition de matière de matrice ou une composition d'encre.

9. Composition selon l'une quelconque des revendications 1 à 8, dans laquelle le polyol est le polytétraméthylèneglycol.

10. Composition selon l'une quelconque des revendications 1 à 9, dans laquelle ladite composition comprend de plus un amorceur de polymérisation.

11. Composition selon la revendication 10, dans laquelle ledit amorceur de polymérisation est un amorceur de photo-polymérisation.

12. Composition selon la revendication 10, dans laquelle ledit amorceur de polymérisation est un amorceur de polymérisation thermique.

13. Fibre optique comprenant une ou plusieurs couches de revêtement, au moins une desdites couches de revêtement étant une composition durcie selon l'une quelconque des revendications 1 à 12.

14. Procédé pour fabriquer la composition selon l'une quelconque des revendications 1 à 12, consistant à faire réagir :
(a) ledit polyol ayant un point de fusion de 0°C ou supérieur ;
(b) ledit polyisocyanate ; et
(c) ledit ester (méth)acrylate.
